(19) Europäisches Patentamt / European Patent Office / Office européen des brevets

(11) **EP 3 280 936 B1**

(12) **EUROPÄISCHE PATENTSCHRIFT**

(45) Veröffentlichungstag und Bekanntmachung des Hinweises auf die Patenterteilung:
**08.01.2020** Patentblatt **2020/02**

(51) Int Cl.:
*F16K 11/044* (2006.01)    *F25B 1/00* (2006.01)
*F25B 17/08* (2006.01)    *F25B 30/04* (2006.01)
*F25B 41/04* (2006.01)

(21) Anmeldenummer: **16712902.2**

(22) Anmeldetag: **31.03.2016**

(86) Internationale Anmeldenummer:
**PCT/EP2016/057061**

(87) Internationale Veröffentlichungsnummer:
**WO 2016/162258 (13.10.2016 Gazette 2016/41)**

(54) **VENTIL FÜR EINE ADSORPTIONSWÄRMEPUMPE UND VERWENDUNG DES VENTILS IN EINER ADSORPTIONSWÄRMEPUMPE**

VALVE FOR AN ADSORPTION HEAT PUMP AND USE OF THE VALVE IN AN ADSORPTION HEAT PUMP

VANNE POUR UNE POMPE À CHALEUR À ADSORPTION ET UTILISATION DE LA VANNE DANS UNE POMPE À CHALEUR À ADSORPTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.04.2015 DE 102015206269**

(43) Veröffentlichungstag der Anmeldung:
**14.02.2018** Patentblatt **2018/07**

(73) Patentinhaber: **Mahle International GmbH**
**70376 Stuttgart (DE)**

(72) Erfinder: **BURK, Roland**
**70469 Stuttgart (DE)**

(74) Vertreter: **BRP Renaud & Partner mbB**
**Rechtsanwälte Patentanwälte**
**Steuerberater**
**Königstraße 28**
**70173 Stuttgart (DE)**

(56) Entgegenhaltungen:
WO-A1-2006/092401    WO-A1-2012/108140
WO-A1-2013/022867    JP-A- 2005 003 190
JP-A- 2010 038 336

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Ventil für eine Adsorptionswärmepumpe mit einem ersten Kanal, einem zweiten Kanal, einem dritten Kanal, einer ersten Ventileinheit, die den ersten Kanal öffnet und verschließt und einen ersten Ventilkörper und einen ersten Ventilsitz umfasst, einer zweiten Ventileinheit, die den zweiten Kanal öffnet und verschließt und einen zweiten Ventilkörper und einen zweiten Ventilsitz umfasst, gemäß dem Oberbegriff des Anspruchs 1. Ferner betrifft die Erfindung die Verwendung eines solchen Ventils in einer Adsorptionswärmepumpe.

Wärmepumpen werden in der Regel mit einem Fluid betrieben, das bei niedrigem Druck unter Wärmezufuhr verdampft, um nach der Verdichtung auf einen höheren Druck unter Wärmeabgabe wieder kondensieren. Dadurch kann durch mechanische Arbeit in Form der Druckänderungen Wärme von der Verdampfungszone zur Kondensationszone übertragen werden. Bei Adsorptionswärmepumpen werden die Druckunterschiede dadurch erreicht, dass ein Adsorptionsmittel das Fluid bei einem niedrigen Druck adsorbiert und bei einem höheren Druck desorbiert. Beim Desorbieren wird dem Adsorptionsmittel auf einem hohen Temperaturniveau Wärme zugeführt und beim Adsorbieren wird dem Adsorptionsmittel auf einem niedrigeren Temperaturniveau Wärme entzogen. Dadurch kann die für die Wärmepumpe benötigten Druckunterschiede durch Wärmen und Kühlen des Adsorptionsmittels erzielt werden. Es wird also keine mechanische Energie, sondern thermische Energie verwendet, um die Wärmepumpe zu betreiben. Dieser Prozess kann nicht kontinuierlich durchgeführt werden, da das Adsorptionsmittel in der Regel ein Feststoff ist, welcher an Ort und Stelle verbleiben muss. Aus diesem Grund werden Adsorptionswärmepumpen diskontinuierlich betrieben und wechseln zyklisch zwischen Adsorption und Desorption.

Dabei wird die Sorptionszone wechselnd mittels eines Hochtemperaturwärmeträgers und mittels eines Mitteltemperaturwärmeträgers temperiert, so dass das Adsorptionsmittel in der Sorptionszone zwischen Adsorption und Desorption wechselt. Für das Umschalten zwischen Adsorption und Desorption ist aus dem Stand der Technik bekannt, Rotationsventile zu verwenden. Solche Rotationsventile sind beispielsweise aus der DE 10 2009 036 545 A1 und der DE 10 2014 211 703 A1 bekannt. Derartige Rotationsventile haben jedoch den Nachteil, dass eine Skalierung der Adsorptionswärmepumpe nicht möglich ist, da die Rotationsventile auf eine feste Anzahl an Sorptionsmodulen ausgelegt sind.

Aus der DE 10 2011 003 664 A1 ist eine Adsorptionswärmepumpe bekannt, welche unabhängige Ventile aufweist, um zwischen dem Hochtemperaturwärmeträger und dem Mitteltemperaturwärmeträger umzuschalten. Bei dieser Ausgestaltung ist die Möglichkeit, Wärme, die beim Aufheizen der Sorptionszone aufgewendet wurde, zurückzugewinnen sehr stark eingeschränkt.

Aus der JP 2005 003190 A ist ein Drei-Wege-Ventil zum Mischen oder Aufteilen von Flüssigkeiten bekannt. Das Ventil weist zwei Ventilkörper auf, die durch ein Federelement, das zwischen den beiden Ventilkörpern angeordnet ist, mit einer Federkraft in Richtung einer jeweiligen Schließstellung der Ventilkörper beaufschlagt sind. Ferner weist das Ventil einen Stellantrieb mit einer Steuerstange auf, die die beiden Ventilkörper durchgreift. An der Steuerstange sind Mitnehmer für die Ventilkörper angeordnet, mit welchen die Ventilkörper bewegt werden können, um den jeweiligen Durchfluss zu steuern. Entsprechende Ventile sind auch aus der JP 2010 038336 A, der WO 2006/092401 A1 und der WO 2012/108140 A1 bekannt.

Der vorliegenden Erfindung liegt die Aufgabe zugrunde, die Flexibilität und den Wirkungsgrad einer Adsorptionswärmepumpe zu verbessern.

Diese Aufgabe wird erfindungsgemäß durch die unabhängigen Ansprüche gelöst. Vorteilhafte Weiterbildungen sind Gegenstand der abhängigen Ansprüche.

Die Erfindung beruht auf dem allgemeinen Gedanken, Ventile für die Adsorptionswärmepumpe zu verwenden, welche nicht nur digital zwischen zwei Zuständen umschalten, sondern auch Zwischenstellungen einnehmen können, welche eine gedrosselte Verbindung bereitstellen. Dadurch kann bei einem Wechsel zwischen der Desorptionsphase und der Adsorptionsphase oder umgekehrt der jeweilige Wärmeträger zunächst gedrosselt durch die Sorptionszone geleitet werden, so dass ähnlich wie bei einem Wärmetauscher ein Großteil der Wärme aus dem Sorptionsmodul rückgewonnen und auf den durchströmenden Wärmeträger übertragen werden kann. Zweckmäßig ist es, dass das Ventil eine Schließstellung aufweist, in der eine erste Ventileinheit und eine zweite Ventileinheit geschlossen sind, dass das Ventil eine erste Offenstellung aufweist, in der die erste Ventileinheit vollständig geöffnet ist, dass das Ventil eine zweite Offenstellung aufweist, in der die zweite Ventileinheit vollständig geöffnet ist, dass das Ventil mindestens eine Zwischenstellung aufweist, in der eine der beiden Ventileinheiten teilweise geöffnet ist, und dass das Ventil derart ausgebildet ist, dass der Stellantrieb das Ventil in der Schließstellung, in den Offenstellungen und der mindestens einen Zwischenstellung leistungslos halten kann. Dadurch kann die Verbindung von dem Sorptionsmodul zu dem Hochtemperaturwärmeträger und dem Mitteltemperaturwärmeträger nicht nur hin- und hergeschaltet, sondern auch durch die Zwischenstellungen eine gedrosselte Verbindung hergestellt werden. Des Weiteren können auch beide Verbindungen zu dem Sorptionsmodul geschlossen sein. Dies ermöglicht eine sehr flexible Steuerung der Adsorptionswärmepumpe, so dass der Wirkungsgrad der Adsorptionswärmepumpe verbessert werden kann. Insbesondere kann ein hoher Anteil sensible Wärme aus den Sorptionsmodulen rückgewonnen werden. Darüber hinaus kann die beim Wechsel zwischen Adsorptions- und Desorptionsphase auftretenden hohen Sorptionsleistungen reduziert bzw. angepasst werden, um negative Effekte bei zu hohen Leistungen zu verhindern. Ferner kann dadurch, dass das Ventil die einzelnen Stellungen leistungslos halten kann, der Energieverbrauch, der zum Betreiben der Ventile benötigt wird, reduziert werden, so dass insgesamt der Wirkungsgrad der Adsorptionswärmepumpe verbessert werden kann.

In der Beschreibung und den beigefügten Ansprüchen wird unter "vollständig geöffnet" verstanden, dass ein Ventil so weit geöffnet ist, wie es die geometrischen Eigenschaften des Ventils erlauben. Insbesondere, dass der größtmögliche wirksame Strömungsquerschnitt des Ventils erzielt ist.

In der Beschreibung und den beigefügten Ansprüchen wird unter "leistungslos" verstanden, dass dem Ventil keine Leistung zugeführt wird. Das Ventil kann ohne Energieverbrauch, beispielsweise eine Stellung halten. Bei einem elektrisch angetriebenen Ventil bedeutet leistungslos demnach stromlos, also dass kein Strom fließen muss, um das Ventil in einer Stellung zu halten. Es wird also keine elektrische Leistung benötigt.

Erfindungsgemäß ist vorgesehen, dass der Stellantrieb einen Schrittmotor und eine Getriebeeinheit aufweist, wobei der Schrittmotor und die Getriebeeinheit derart ausgelegt sind, dass ein stromloses Haltemoment ausreicht, um das Ventil in den Stellungen zu halten. Schrittmotoren haben üblicherweise konstruktionsbedingt an den jeweiligen Schritten ein gewisses Haltemoment. Durch eine entsprechende Übersetzung der Getriebeeinheit kann dadurch das Haltemoment des Stellantriebs derart ausgelegt werden, dass das Ventil in den einzelnen Stellungen verharrt. Dazu muss beispielsweise das Haltemoment groß genug sein, um die Schließkraft des Federelements und druckinduzierte Kräfte auf den Ventilkörper aufnehmen kann.

Des Weiteren kann beispielsweise die Getriebeeinheit selbsthemmend ausgebildet sein, so dass dadurch ein hohes Haltemoment des Stellantriebs erzielt werden kann.

Eine weitere günstige Möglichkeit sieht vor, dass der Stellantrieb einen Schrittmotor-Linearantrieb umfasst. Ein solcher Antrieb ist besonders gut für ein solches Ventil geeignet, da die Steuerstange, welche die Ventilkörper beeinflusst, linear bewegt werden muss.

Eine besonders günstige Möglichkeit sieht vor, dass der Stellantrieb Zentrierelemente aufweist, mit welchen die Steuerstange und vorzugsweise die Ventilkörper zentriert sind. Auf diese Weise kann die ordnungsgemäße Bewegung der einzelnen Elemente verbessert werden. Insbesondere kann dadurch die Zentrierung der Ventilkörper auf den Ventilsitzen verbessert werden, so dass die Abdichtung der Ventileinheiten verbessert ist.

Eine weitere besonders günstige Möglichkeit sieht vor, dass die Zentrierelemente durch Federlaschen an den Mitnehmerelementen gebildet sind. Die Mitnehmerelemente erstrecken sich von der Steuerstange radial nach außen, so dass ein Abstand der Steuerstange zu einer Innenwand des Ventils geringer ist als beispielsweise der Abstand zwischen der Steuerstange und der Wand. Dadurch können die Zentrierelemente kleiner ausgestaltet werden. Folglich kann durch die Anordnung der Zentrierelemente an den Mitnehmerelementen eine bessere Zentrierwirkung erzielt werden.

Erfindungsgemäß ist vorgesehen, dass eine Ventilöffnungskennlinie der Ventileinheiten, welche einen Durchflussbeiwert abhängig von einem Verstellweg beschreibt, nicht linear ist. Auf diese Weise können Stellungen, in welchen die Ventileinheiten nur teilweise geöffnet sind, bezüglich des Verstellwegs verbreitert werden, so dass bestimmte Teilöffnungsbereiche präziser angefahren werden können.

Der Durchflussbeiwert ist dabei gegeben durch die Formel:

$$k_v = Q \, (\rho/\Delta p)^{1/2}$$

Dabei ist $k_v$ der Durchflussbeiwert, $Q$ der effektive Öffnungsquerschnitt, der geometrische Strömungseffekte berücksichtigt, $\rho$ die Dichte und $\Delta p$ die Druckdifferenz zwischen Einlass und Auslass des Ventils ist.

Eine weitere vorteilhafte Lösung sieht vor, dass die Ventilöffnungskennlinie eine über den Verstellweg variierende Steigung aufweist. Auf diese Weise können bestimmte Bereiche der Kennlinie genauer angefahren werden. In Bereichen mit geringerer Steigung ändert sich der Durchflussbeiwert abhängig vom Verstellweg geringer als in Bereichen mit größerer Steigung. Folglich ist in Bereichen mit geringerer Steigung eine genauere Einstellung des Durchflussbeiwerts möglich.

Eine besonders vorteilhafte Lösung sieht vor, dass die Steigung der Ventilöffnungskennlinie mit steigendem Verstellweg größer wird. Dadurch können geringe Öffnungswerte der Ventileinheiten genauer angefahren werden und dennoch kann dadurch der Gesamtverstellweg reduziert werden, da bei großen Öffnungsgraden der Ventileinheiten eine hohe Genauigkeit nicht mehr erforderlich ist.

Erfindungsgemäß ist vorgesehen, dass die Ventilöffnungskennlinie mindestens einen abgeflachten Bereich, insbesondere eine Stufe aufweist. Dies kann vorteilhaft sein, wenn ein definierter Öffnungsgrad oder Durchflussbeiwert eingestellt werden können soll. Dadurch entsteht ein Toleranzbereich für den Verstellweg, indem der Durchflussbeiwert annähernd konstant bleibt.

Eine günstige Variante sieht vor, dass zumindest einer der Ventilkörper eine Ventilfläche aufweist, die derart verläuft, dass ein Winkel der Ventilfläche zu einer Achse der jeweiligen Ventileinheit in axialer Richtung variiert. Beim Öffnen der Ventileinheit bildet sich ein Ringspalt zwischen dem Ventilkörper und dem Ventilsitz.

Die Querschnittsfläche dieses Ringspaltes bestimmt im Wesentlichen den Durchflussbeiwert. Die Neigung, also der Winkel der Ventilfläche zu der Achse der jeweiligen Ventileinheit, bestimmt die Rate, mit welcher die Fläche des Ringspaltes zunimmt, abhängig vom Verstellweg des Ventilkörpers in axialer Richtung. Dadurch, dass der Winkel der Ventilfläche zu der Achse in axialer Richtung variiert, wird somit die Abhängigkeit zwischen der Fläche des Ringspaltes und des Verstellwegs variiert, so dass dadurch die Ventilöffnungskennlinie der Ventileinheiten eingestellt werden kann.

Eine besonders günstige Variante sieht vor, dass der erste Kanal, der zweite Kanal und der dritte Kanal jeweils in einer zentralen Kammer münden. Dadurch kann durch die erste Ventileinheit eine fluidische Verbindung zwischen dem ersten Kanal und dem dritten Kanal gesteuert werden und durch die zweite Ventileinheit eine fluidische Verbindung zwischen dem zweiten Kanal und dem dritten Kanal gesteuert werden. Dadurch kann beispielsweise ein an dem dritten Kanal angeschlossenes Sorptionsmodul wechselnd mit einem an dem ersten Kanal angeschlossenen Hochtemperaturwärmeträger und einem an dem zweiten Kanal angeschlossenen Mitteltemperaturwärmeträger hin- und hergeschaltet werden oder verschlossen werden, so dass keiner der Wärmeträger durch das Sorptionsmodul strömt.

Ferner wird die oben genannte Aufgabe durch die Verwendung eines solchen Ventils in einer Adsorptionswärmepumpe gelöst, um zwischen einem Hochtemperaturwärmeträger und einem Mitteltemperaturwärmeträger umzuschalten.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch

Fig. 1 eine Prinzipskizze einer Adsorptionswärmepumpe,

Fig. 2 eine Prinzipskizze eines Sorptionsmoduls der Adsorptionswärmepumpe,

Fig. 3 eine beispielhafte Anordnung dreier Sorptionsmodule,

Fig. 4 ein Temperaturverlauf in der Sorptionsphase, in der Adsorptionsphase, in der Desorptionsphase und bei einem Wechsel von der Adsorptionsphase zu der Desorptionsphase,

Fig. 5 eine prinzipielle Schnittdarstellung durch ein erfindungsgemäßes Ventil,

Fig. 6a-e verschiedene Stellungen, in denen sich ein erfindungsgemäßes Ventil befinden kann,

Fig. 7 eine Ventilöffnungskennlinie mit einem progressiven Verlauf,

Fig. 8a - c eine vergrößerte Darstellung des Bereichs A aus Fig. 5 bei drei verschiedenen Stellungen einer Ventileinheit des Ventils,

Fig. 9a, b eine vergrößerte Darstellung des Bereichs A aus Fig. 5 zur Erläuterung des Verlaufs der Ventilfläche,

Fig. 10 eine Ventilöffnungskennlinie eines Ventils mit einer Stufe,

Fig. 11a, b eine vergrößerte Darstellung des Bereichs A bei einer anderen Ausführungsform des Ventils mit einer stufenförmigen Kennlinie, wie sie in Fig. 10 dargestellt ist.

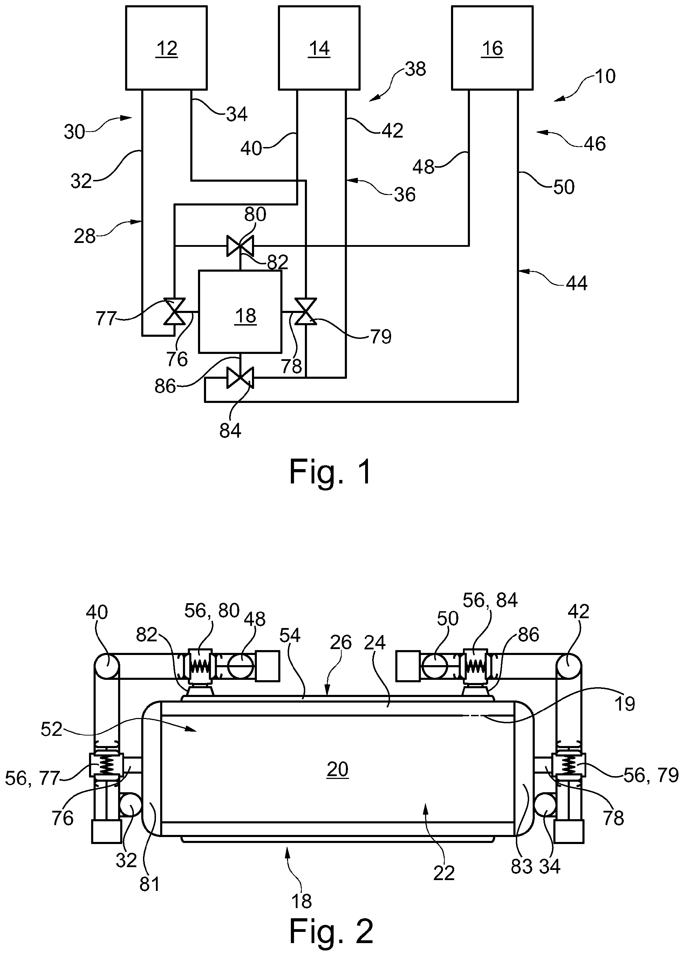

Eine in Fig. 1 dargestellte Adsorptionswärmepumpe 10 weist eine Hochtemperaturwärmequelle 12, eine Mitteltemperaturwärmesenke 14 und eine Niedertemperaturwärmequelle 16 auf. Ferner weist die Adsorptionswärmepumpe 10 mindestens ein, beispielsweise drei, Sorptionsmodule 18 auf. Das mindestens eine Sorptionsmodul 18, beispielhaft in Fig. 2 dargestellt, umfasst eine Sorptionszone 20, die ein Sorptionsmittel 22 enthält und im Wechsel geheizt und gekühlt wird. In einer Desorptionsphase der Sorptionszone 20 wird die Sorptionszone 20 durch die Hochtemperaturwärmequelle 12 geheizt und in einer Adsorptionsphase wird die Sorptionszone 20 durch die Mitteltemperaturwärmesenke 14 gekühlt. Des Weiteren weist das Sorptionsmodul 18 eine Phasenwechselzone 24 auf, in welcher ein Arbeitsmedium 26 kondensieren und verdampfen kann. Das Sorptionsmodul 18 weist eine Fluidverbindung 19 zwischen der Phasenwechselzone 24 und der Sorptionszone 20 auf, durch welche das Arbeitsmedium 26 von der Phasenwechselzone 24 zu der Sorptionszone 20 und zurück gelangen kann.

Die Hochtemperaturwärmequelle 12 temperiert einen Hochtemperaturwärmeträger 28, welcher in einem Hochtemperaturkreislauf 30 zirkuliert. Der Hochtemperaturkreislauf weist einen Hochtemperaturvorlauf 32 auf, in welchem der Hochtemperaturwärmeträger 28 zu dem mindestens einen Sorptionsmodul 18 geleitet wird und einen Hochtemperaturrücklauf 34 auf, über welchen der Hochtemperaturwärmeträger 28 zu der Hochtemperaturwärmequelle 12 zurückgeführt wird.

Die Hochtemperaturwärmequelle 12 weist eine Temperatur oberhalb der Umgebungstemperatur auf, vorzugsweise über 80 °C, besonders bevorzugt über 100 °C, beispielsweise 110 °C auf. Die Hochtemperaturwärmequelle 12 kann eine Abwärmequelle aus beliebigen Energiewandlungs- oder Wertschöpfungsprozessen darstellen oder aber die Wärmeenergie, aus chemischer Energie, beispielsweise durch Verbrennung, oder aus kostenloser Sonnenenergie gewinnen.

Die Mitteltemperaturwärmesenke 14 kühlt einen Mitteltemperaturwärmeträger 36, der in einem Mitteltemperaturkreislauf 38 zirkuliert. Der Mitteltemperaturkreislauf 38 weist einen Mitteltemperaturvorlauf 40 auf, in welchen der Mitteltemperaturwärmeträger 36 von der Mitteltemperaturwärmesenke 14 zu dem Sorptionsmodul 18 geleitet wird. Des Weiteren weist der Mitteltemperaturkreislauf 38 einen Mitteltemperaturrücklauf 42 auf, über welchen der Mitteltemperaturwärmeträger 36 von dem mindestens einen Sorptionsmodul 18 zurück zur Mitteltemperaturwärmesenke 14 geleitet werden kann.

Die Temperatur der Mitteltemperaturwärmesenke 14 entspricht in etwa der Umgebungstemperatur. Die Temperatur ist tatsächlich etwas größer als die Umgebungstemperatur, so dass über einen Wärmetauscher Wärmeenergie aus dem Mitteltemperaturkreislauf 38 an die Umgebung abgegeben werden kann. Die Mitteltemperaturwärmesenke 14 weist dazu einen Kühler, beispielsweise einen Wasser- oder Luftkühler auf.

Die Niedertemperaturwärmequelle 16 temperiert einen Niedertemperaturwärmeträger 44, der in einem Niedertemperaturkreislauf 46 zirkuliert. Der Niedertemperaturkreislauf 46 weist einen Niedertemperaturvorlauf 48 auf, in welchem der Niedertemperaturwärmeträger 44 zu dem mindestens einen Sorptionsmodul 18 geleitet wird. Des Weiteren weist der Niedertemperaturkreislauf 46 einen Niedertemperaturrücklauf 50 auf, in welchem der Niedertemperaturwärmeträger 44 von dem mindestens einen Sorptionsmodul 18 zurück zur Niedertemperaturquelle 16 geleitet wird.

Die Temperatur der Niedertemperaturwärmequelle 16 liegt unterhalb der Umgebungstemperatur und dient zum Kühlen, beispielsweise von Fahrzeugen, Gebäuden oder einem Kühlschrank oder ähnlichem. Wenn mittels des Niedertemperaturwärmeträgers 44 etwas gekühlt wird, wird dieser in der Niedertemperaturwärmequelle 16 aufgewärmt, daher die Bezeichnung "Quelle".

Im Falle einer Wärmepumpenanwendung kann auch die Niedertemperaturwärmequelle 16 durch die Umwelt in Form von Außenluft, Erdwärme oder solarer Wärme gebildet sein, deren Wärme bei niedriger Temperatur aufgenommen wird und über den Mitteltemperaturkreislauf 14 auf einem höheren Heiztemperaturniveau zum Beheizen eines Raumes oder eines Gebäudes abgegeben wird. In diesem Falle wird die Hochtemperaturwärmequelle 12 durch einen Verbrennungsprozess eines chemischen Energieträgers erzeugt, deren Wärmeenergie ebenfalls zum Heizen auf dem Temperaturniveau des Mitteltemperaturkreislaufes 14 genutzt wird.

Die Sorptionsmodule 18 weisen einen ersten Strömungskanal 52 auf, welcher in thermischem Kontakt mit der Sorptionszone 20, insbesondere mit dem Sorptionsmittel 22 steht. Dadurch kann ein Wärmeträger, welcher durch den ersten Strömungskanal 52 strömt, das Sorptionsmittel temperieren. Des Weiteren weisen die Sorptionsmodule 18 einen zweiten Strömungskanal 54 auf, welcher im thermischen Kontakt mit der Phasenwechselzone 24 steht, so dass die Phasenwechselzone 24 durch einen Wärmeträger, der durch den zweiten Strömungskanal 54 strömt, temperiert werden kann.

Je Sorptionsmodul 18 weist die Adsorptionswärmepumpe 10, wie beispielhaft in Fig. 2 dargestellt, mehrere Ventile 56 auf, beispielsweise vier, also ein erstes Ventil 77, ein zweites Ventil 79, ein drittes Ventil 80 und ein viertes Ventil 84. Mit den Ventilen 56 sind die beiden Strömungskanäle 52, 54 an die Kreisläufe 30, 38 und 46 angeschlossen.

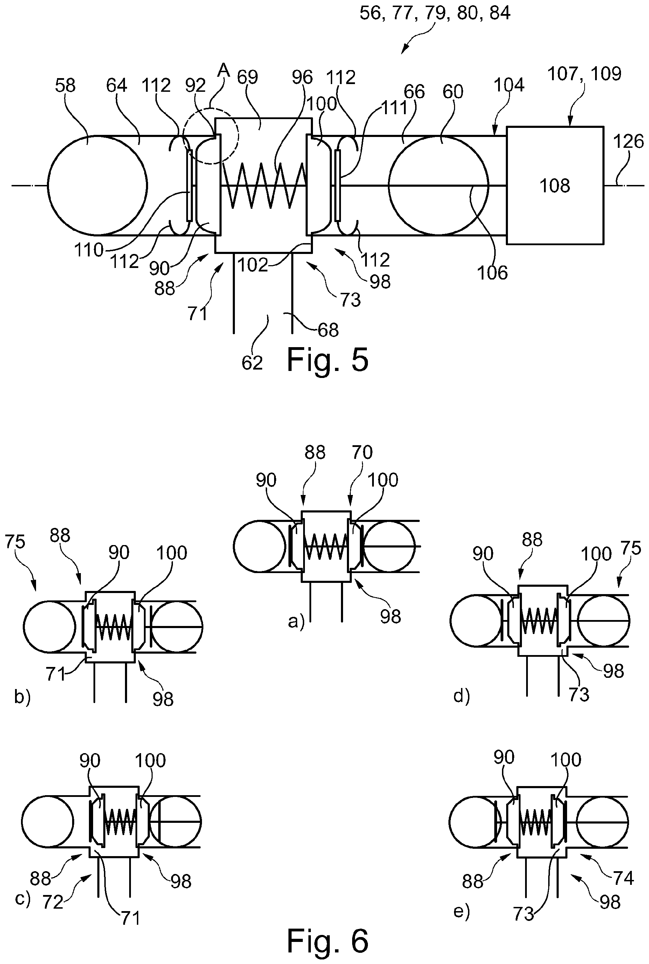

Die Ventile 56 weisen, wie beispielsweise in Fig. 5 dargestellt, jeweils einen ersten Anschluss 58, einen zweiten Anschluss 60 und einen dritten Anschluss 62 auf. Von dem ersten Anschluss 58 aus erstreckt sich ein erster Kanal 64, von dem zweiten Anschluss 60 aus erstreckt sich ein zweiter Kanal 66, und von dem dritten Anschluss 62 aus erstreckt sich ein dritter Kanal 68. Die drei Kanäle 64, 66 und 68 münden in einer zentralen Kammer 69, über welche eine fluidische Verbindung zwischen den drei Kanälen hergestellt ist oder herstellbar ist.

Die Ventile 56 ermöglichen mehrere Schaltstellungen, wie sie beispielhaft in den Fig. 6a-e dargestellt sind. In einer Schließstellung 70 sind der erste Kanal 64 und der zweite Kanal 66 verschlossen, so dass keine fluidische Verbindung zwischen den einzelnen Kanälen vorliegt. In einer ersten Offenstellung 72 ist der erste Kanal 64 geöffnet und der zweite Kanal 66 geschlossen, so dass eine erste fluidische Verbindung 71 zwischen dem ersten Kanal 64 und dem dritten Kanal 68 gegeben ist. In einer zweiten Offenstellung 74 ist der zweite Kanal 66 geöffnet und der erste Kanal 64 geschlossen, so dass eine zweite fluidische Verbindung 73 zwischen dem zweiten Kanal 66 und dem dritten Kanal 68 gegeben ist. Des Weiteren weisen die Ventile 56 mindestens eine Zwischenstellung 75 auf, in welchen der erste Kanal 64 oder der zweite Kanal 66 teilweise geöffnet ist. Dadurch besteht eine gedrosselte fluidische Verbindung zwischen dem ersten Kanal 64 und dem dritten Kanal 68 oder zwischen dem zweiten Kanal 66 und dem dritten Kanal 68.

Über das erste Ventil 77 der Ventile 56 ist ein Einlass 76 des ersten Strömungskanals 52 mit dem Hochtemperaturzulauf 32 und dem Mitteltemperaturvorlauf 40 verbunden. Dabei ist der dritte Anschluss 62 an dem Einlass 76 des ersten Strömungskanals 52 angeschlossen, so dass der dritte Kanal 68 des ersten Ventils 77 fluidisch mit dem Einlass 76 des ersten Strömungskanals 52 verbunden ist. Der erste Anschluss 58 ist an den Hochtemperaturvorlauf 32 angeschlossen und der zweite Anschluss 60 ist an den Mitteltemperaturvorlauf 40 angeschlossen. Dadurch kann der erste Strömungskanal 52 des Sorptionsmoduls 18 zwischen dem Hochtemperaturvorlauf 32 und dem Mitteltemperaturvorlauf 40 umgeschaltet werden und dadurch eine Heizphase und eine Kühlungsphase umgeschaltet werden.

In der Desorptionsphase, in welcher das Sorptionsmittel 22 geheizt werden soll, ist eine fluidische Verbindung zwischen dem Einlass des ersten Strömungskanals 52 und dem Hochtemperaturvorlauf 32 hergestellt. In der Adsorptionsphase ist das erste Ventil derart geschaltet, dass eine fluidische Verbindung zwischen dem ersten Strömungskanal 52 und dem Mitteltemperaturvorlauf 40 hergestellt ist, so dass das Sorptionsmittel 22 durch den Mitteltemperaturwärmeträger 36 gekühlt werden kann.

Ein Auslass 78 des ersten Strömungskanals 52 ist über das zweite Ventil 79 der Ventile 56 mit dem Hochtemperaturrücklauf 34 und dem Mitteltemperaturrücklauf 42 verbunden. Dabei ist der dritte Anschluss 62 des zweiten Ventils 79 mit dem Auslass 78 des ersten Strömungskanals 52 verbunden und der erste Anschluss 58 des zweiten Ventils 79 mit dem Hochtemperaturrücklauf 34 und der zweite Anschluss 60 des zweiten Ventils 79 mit dem Mitteltemperaturrücklauf 42 verbunden. Dieses zweite Ventil 79 wird entsprechend dem ersten Ventil 77 in der Desorptionsphase auf den Hochtemperaturrücklauf 34 und in der Adsorptionsphase auf den Mitteltemperaturrücklauf 42 geschaltet.

Darüber hinaus weist die Adsorptionswärmepumpe 10 je Sorptionsmodul 18 das dritte Ventil 80 auf, welches einen Einlass 82 des zweiten Strömungskanals 54 mit dem Mitteltemperaturvorlauf 40 und dem Niedertemperaturvorlauf 48 verbindet. In einer Kondensationsphase, in welcher das Arbeitsmedium 26 in der Phasenwechselzone 24 kondensiert, ist das dritte Ventil 80 derart geschaltet, dass eine fluidische Verbindung zwischen dem zweiten Strömungskanal 54 und dem Mitteltemperaturvorlauf 40 besteht. So kann die Phasenwechselzone 24 durch den Mitteltemperaturwärmeträger 36 gekühlt werden. In einer Verdampfungsphase ist das dritte Ventil 80 derart geschaltet, dass eine fluidische Verbindung zwischen dem zweiten Strömungskanal 54 und dem Niedertemperaturvorlauf 48 gegeben ist. Dadurch kann in der Verdampfungsphase das in der Phasenwechselzone 24 verdampfende Arbeitsmedium 26 Wärme aus dem Niedertemperaturwärmeträger 44 aufnehmen und diesen dadurch abkühlen.

Ferner weist die Adsorptionswärmepumpe je Sorptionsmodul das vierte Ventil 84 auf, welches einen Auslass 86 des zweiten Strömungskanals 54 mit dem Mitteltemperaturrücklauf 42 und dem Niedertemperaturrücklauf 50 verbindet. Entsprechend dem dritten Ventil 80 schaltet das vierte Ventil 84 in der Kondensationsphase eine fluidische Verbindung zwischen dem zweiten Strömungskanal 54 und dem Mitteltemperaturrücklauf 42 und in der Verdampfungsphase eine fluidische Verbindung zwischen dem zweiten Strömungskanal 54 und dem Niedertemperaturrücklauf 50.

Im Betrieb der Adsorptionswärmepumpe 10 werden die Sorptionsmodule 18 zyklisch betrieben. Die Desorptionsphase und die Adsorptionsphase wechseln sich ab. In der Adsorptionsphase sind das erste Ventil 77 und das zweite Ventil 79 derart geschaltet, dass die Sorptionszone 20 durch den Mitteltemperaturwärmeträger 36 gekühlt wird. Dadurch kann das Sorptionsmittel 22 das Arbeitsmedium 26 adsorbieren, wodurch der Druck innerhalb des Sorptionsmoduls 18 verringert wird. Dadurch kann das in der Phasenwechselzone 24 lokalisierte flüssige Arbeitsmedium 26 verdampfen, wodurch das Arbeitsmedium 26 Wärmeenergie aufnehmen kann. Dadurch wird die Phasenwechselzone 24 abkühlt. Durch die Abkühlung der Phasenwechselzone kann dementsprechend Wärmeenergie aus dem Niedertemperaturwärmeträger 44 aufgenommen werden, wodurch dieser gekühlt wird.

Dazu sind in der Verdampfungsphase das dritte Ventil 80 und das vierte Ventil 84 derart geschaltet, dass der Niedertemperaturwärmeträger 44 durch den zweiten Strömungskanal 54 strömt und damit im thermischen Kontakt mit der Phasenwechselzone 24 steht. Die Adsorptionsphase erfolgt dementsprechend im Wesentlichen zeitgleich mit der Verdampfungsphase, bei der der gewünschte Effekt nämlich der Kühlung des Niedertemperaturwärmeträgers 44 erzielt wird. Diese Phase wird auch Nutzphase genannt.

In einer Regenerationsphase dagegen wird die Sorptionszone 20 aufgeheizt, so dass die Desorptionsphase der Sorptionszone 20 eingeleitet wird. Dies wird dadurch erreicht, dass das erste Ventil 77 und das zweite Ventil 79 derart geschaltet sind, dass der Hochtemperaturwärmeträger 28 durch den ersten Strömungskanal 52 strömt und somit im thermischen Kontakt mit dem Sorptionsmittel 22 steht und dieses aufheizen kann. Dadurch gibt das Sorptionsmittel 22 das Arbeitsmedium 26 ab, so dass der Druck in dem Sorptionsmodul 18 ansteigt und somit das Arbeitsmedium 26 kondensieren kann.

Um in der dadurch eingeleiteten Kondensationsphase das Arbeitsmedium 26 in der Phasenwechselzone 24 zu kondensieren, werden das dritte Ventil 80 und das vierte Ventil 84 derart geschaltet, dass der Mitteltemperaturwärmeträger 36 durch den zweiten Strömungskanal 54 strömt und somit im thermischen Kontakt mit der Phasenwechselzone 24 steht und diese kühlen kann. Dadurch kann erzielt werden, dass das Arbeitsmedium 26 in der Phasenwechselzone 24 kondensiert und dort in der Nutzphase zur Verdampfung bereitsteht.

Bei einem Wechsel von der Regenerationsphase zur Nutzphase und umgekehrt müssen die Sorptionszone 20 von der Desorptionsphase in die Adsorptionsphase oder umgekehrt und die Phasenwechselzone 24 von der Kondensationsphase zur Verdampfungsphase oder umgekehrt gebracht werden. Diese zeichnen sich jeweils durch einen erheblichen Temperaturunterschied aus, so dass durch ein einfaches zeitgleiches Umschalten der jeweils korrespondierenden Ventile 77 und 79 sowie 80 und 84 zwischen der Regenerationsphase und der Nutzphase infolge der sensiblen Wärmekapazitäten erhebliche Mengen an Wärme in den jeweils komplementären Kreislauf verschleppt werden. Dadurch geht insbesondere Hochtemperaturwärme von der Hochtemperaturwärmequelle 12 an die Mitteltemperaturwärmesenke 14 und von dieser an die Niedertemperaturwärmequelle 16 verloren.

Um die jeweiligen Wärmeverluste zu reduzieren, werden beim Übergang zwischen der Regenerationsphase und der Nutzphase und umgekehrt sogenannte Kreuzschaltungen eingestellt, bei welchen beispielsweise der erste Strömungskanal 52 einlassseitig mit dem Hochtemperaturvorlauf 32 und auslassseitig mit dem Mitteltemperaturrücklauf 42 verbunden ist. Dadurch kann beim Wechsel zwischen den Phasen, die unproduktive Verschleppung von Wärme von einem Kreislauf höherer Temperatur in einen Kreislauf niedrigerer Temperatur verringert werden.

Bei dem Wechsel von der Adsorptionsphase zu der Desorptionsphase heizt der Hochtemperaturwärmeträger 28 die Sorptionszone 20 auf. Dadurch kühlt sich der Hochtemperaturwärmeträger 28 ab. Diese verlorene Wärme muss aufgebracht werden, bewirk aber keine thermische Pumpleistung. Folglich reduziert sich dadurch der Wirkungsgrad.

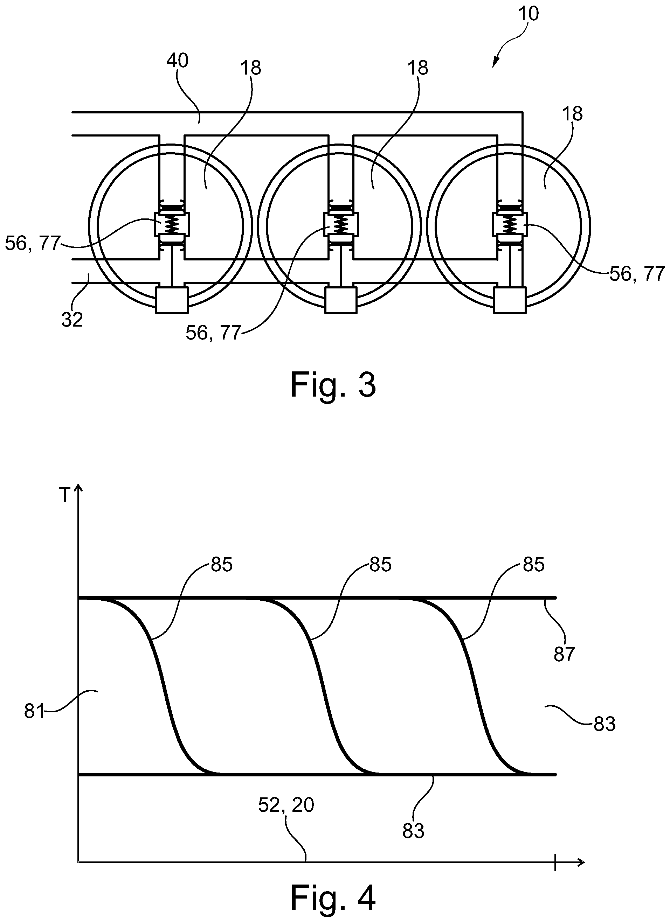

Wenn der Hochtemperaturwärmeträger 28 langsam durch den ersten Strömungskanal 52 strömt, kühlt sich der Hochtemperaturwärmeträger annähernd auf die Temperatur der Sorptionszone 20 ab, nämlich die Temperatur des Mitteltemperaturwärmeträgers 36. In der Sorptionszone 20 bildet sich dann ein Temperaturgradient 85 aus, wobei einlassseitig die Temperatur auf der Temperatur 87 des Hochtemperaturwärmeträgers 28 sein kann und auslassseitig die Temperatur der Sorptionszone 20 auf der Temperatur 89 des Mitteltemperaturwärmeträgers 36 ist, wie es beispielsweise in Fig. 4 gezeigt ist. Während der Temperaturwechselphase schiebt sich der Temperaturgradient 85 von einer Einlassseite 81 der Sorptionszone 20 bis zu einer Auslassseite 83 der Sorptionszone 20, so dass während nahezu der gesamten Temperaturwechselphase von Adsorption zu Desorption der Hochtemperaturwärmeträger 28, welcher aus dem ersten Strömungskanal 52 austritt, die Temperatur 89 des Mitteltemperaturwärmeträgers 36 aufweist. Dadurch ist es sinnvoll, den in der Sorptionszone 20 abgekühlten Hochtemperaturwärmeträger 28 anstatt in den Hochtemperaturkreislauf 30 in den Mitteltemperaturkreislauf 38 zurückzuführen.

Entsprechend kann bei einem Wechsel von der Desorptionsphase zur Adsorptionsphase, also bei einem Abkühlen der Sorptionszone 20, die Wärme, die in dem Sorptionsmodul 18 gespeichert ist, durch eine entsprechende Kreuzschaltung in den Hochtemperaturkreislauf 30 zurückgeführt werden. Dadurch wird die Wärmeenergie, die dem Hochtemperaturkreislauf 30 beim Aufheizen der Sorptionszone 20 entzogen wurde, beim Abkühlen der Sorptionszone 20 wieder zurückgeführt. Folglich kann somit die schädliche Verschleppung von Wärme bei den Temperaturwechseln reduziert werden.

Dieser Effekt kann besonders effizient genutzt werden, wenn während einer Temperaturwechselphase der Wärmeträger nur gedrosselt durch den ersten Strömungskanal 52 strömt.

Durch diese Kreuzschaltungen werden Volumenströme von dem Hochtemperaturkreislauf 30 zu dem Mitteltemperaturkreislauf 38 und umgekehrt hin- und hergeschoben. Dazu können beispielsweise Ausgleichsbehälter zum Einsatz kommen, die eine temporäre Massenverschiebung zwischen zwei Kreisläufen zulassen. Über einen Zyklus gleichen sich die Verschiebungen allerdings aus. Des Weiteren sind, wenn mehrere Sorptionsmodule verwendet werden, diese üblicherweise phasenverschoben eingesetzt, so dass sich die Verschiebung der Wärmeträger zwischen den Kreisläufen auch zu jedem Zeitpunkt ausgleicht. Dies ist insbesondere dann der Fall, wenn die Kreuzschaltungsphasen zweier komplementär umgeschalteter Module zeitgleich, gleich lang und mit gleichem Volumenstrom stattfinden. In der Praxis können auch mehrere dieser Maßnahmen kombiniert werden.

Durch eine entsprechende Beschaltung des dritten Ventils 80 und vierten Ventils 84 kann auch Wärme aus der Phasenwechselzone 24 bei den Temperaturwechseln rückgewonnen werden. Da die Phasenwechselzone 24 auch durch die Phasenwechsel des Arbeitsmediums 26 geheizt oder gekühlt wird, kann nur ein kleinerer Teil der Wärme zurückgewonnen werden. Je stärker die Wärmeleistung durch die Phasenwechsel im Vergleich zu der Heizleistung durch die Wärmeträger ist, desto weniger Wärme kann zurückgewonnen werden. Daher wäre eine größere Strömungsgeschwindigkeit der Wärmeträger sinnvoll. Allerdings kann bei einer zu großen Strömungsgeschwindigkeit der Wärmeträger nicht vollständig die Temperatur der Phasenwechselzone annehmen. Folglich muss ein Kompromiss gefunden werden, bei dem die Strömungsgeschwindigkeit des Wärmeträgers das beste Ergebnis liefert. Fein dosierbare Zwischenstellungen der Ventile 56 sind daher von Vorteil.

Die Ventile 56 weisen eine erste Ventileinheit 88 auf, mit welchen der erste Kanal 64 geöffnet und verschlossen werden kann. Dadurch kann die erste Ventileinheit 88 eine fluidische Verbindung zwischen dem ersten Kanal 64 und dem dritten Kanal 68 steuern, so dass auch eine fluidische Verbindung zwischen dem ersten Anschluss 58 und dem dritten Anschluss 62 durch die erste Ventileinheit 88 gesteuert werden kann. Die erste Ventileinheit 88 weist einen ersten Ventilkörper 90 und einen ersten Ventilsitz 92 auf. Wenn der erste Ventilkörper 90 in den ersten Ventilsitz 92 gedrückt ist, verschließt der erste Ventilkörper 90 die durch den ersten Ventilsitz 92 gebildete Öffnung und verschließt somit den ersten Kanal 64. Wird der erste Ventilkörper 90 aus dem ersten Ventilsitz 92 gehoben, bildet sich ein Ringspalt 94 zwischen dem ersten Ventilkörper 90 und dem ersten Ventilsitz 92, durch welchen ein Fluid strömen kann. Die Ventile 56 weisen jeweils ein Federelement 96 auf, welches den ersten Ventilkörper 90 mit einer Schließkraft beaufschlagt, welche den ersten Ventilkörper 90 in den ersten Ventilsitz 92 drückt.

Ferner weisen die Ventil 56 eine zweite Ventileinheit 98 mit einem zweiten Ventilkörper 100 und einem zweiten Ventilsitz 102 auf. Die zweite Ventileinheit 98 ist entsprechend der ersten Ventileinheit 88 derart ausgebildet, dass sie den zweiten Kanal 66 der Ventile 56 öffnen und verschließen kann. Der zweite Ventilsitz 102 umschließt den Strömungsquerschnitt des zweiten Kanals 66. Wenn der zweite Ventilkörper 100 in den zweiten Ventilsitz 102 gedrückt ist verschließt der zweite Ventilkörper 100 eine durch den zweiten Ventilsitz 102 gebildete Öffnung und damit auch den zweiten Kanal 66.

Die zweite Ventileinheit 98 kann demnach den zweiten Kanal 66 öffnen und verschließen. Dadurch kann die zweite Ventileinheit 98 eine fluidische Verbindung zwischen dem dritten Kanal 68 und dem zweiten Kanal 66 steuern. Entsprechend wird eine fluidische Verbindung zwischen dem zweiten Anschluss 60 und dem dritten Anschluss 62 durch die zweite Ventileinheit 98 gesteuert.

Das Federelement 96 der Ventile 56 beaufschlagt auch den zweiten Ventilkörper 100 mit einer Schließkraft, welche den zweiten Ventilkörper 100 in Richtung des zweiten Ventilsitzes 102 drückt.

Das Federelement 96 ist zwischen dem ersten Ventilkörper 90 und dem zweiten Ventilkörper 100 angeordnet, so dass das Federelement 96 sowohl den ersten Ventilkörper 90 als auch den zweiten Ventilkörper 100 in den jeweiligen zugehörigen Ventilsitz 92, 102 drücken kann, um die jeweiligen Ventileinheiten 88 und 98 zu verschließen. Entsprechend sind die beiden Ventileinheiten 88 und 98 einander gegenüberliegend angeordnet, so dass das zwischen dem ersten Ventilkörper 90 und dem zweiten Ventilkörper 100 angeordnete Federelement 96 jeweils eine Schließkraft auf die Ventilkörper ausüben kann. Die Öffnungsrichtungen der beiden Ventileinheiten 88, 98 sind entsprechend entgegengesetzt.

Die Ventile 56 weisen jeweils einen Stellantrieb 104 mit einer Steuerstange 106 und einem Antrieb 108 auf, welcher die Steuerstange 106 antreibt. Die Steuerstange 106 durchgreift den ersten Ventilkörper 90 und den zweiten Ventilkörper 100 und ist in axialer Richtung gleitend in dem ersten Ventilkörper 90 und dem zweiten Ventilkörper 100 gelagert. Ferner weist der Stellantrieb 104 ein erstes Mitnehmerelement 110 und ein zweites Mitnehmerelement 111 auf, welche fest an der Steuerstange 106 gehalten sind und derart angeordnet sind, dass zwischen den beiden Mitnehmerelementen 110, 111 der erste Ventilkörper 90 das Federelement 96 und der zweite Ventilkörper 100 angeordnet sind.

Die Mitnehmerelemente 110, 111 weisen eine derartige radiale Ausdehnung auf, dass, wenn die Steuerstange 106 in axialer Richtung verschoben wird, der erste Ventilkörper 90 durch das erste Mitnehmerelement 110 oder der zweite Ventilkörper 100 durch das zweite Mitnehmerelement 111 aus dem jeweiligen Ventilsitz 92 oder 102 gehoben wird und dadurch entsprechend der erste Kanal 64 oder der zweite Kanal 66 geöffnet wird.

Der Antrieb 108 ist derart ausgebildet, dass ein leistungsloses Haltemoment des Antriebs 108 ausreicht, um die Schließkräfte des Federelements 96 zu überwinden, so dass der Stellantrieb 104 die erste oder die zweite Ventileinheit 88, 98 in einer Position halten kann, in welcher der erste Ventilkörper 90 oder der zweite Ventilkörper 100 aus dem jeweiligen Ventilsitz 92, 102 gehoben ist. Dadurch kann das Ventil 56 in einer Offenstellung, also in einer Stellung, in welcher entweder der erste Kanal 64 oder der zweite Kanal 66 geöffnet ist, verharren, ohne Energie zu verbrauchen. Dies ermöglicht eine energieeffiziente Steuerung der Adsorptionswärmepumpe, wodurch insgesamt der Wirkungsgrad der Adsorptionswärmepumpe verbessert wird.

Entsprechend können auch Zwischenstellungen, in welchen die Ventilkörper 90, 100 nur teilweise aus dem jeweiligen Ventilsitz 92, 102 gehoben sind leistungslos in der Position gehalten werden.

Der Antrieb 108 weist beispielsweise einen Schrittmotor 107 auf, welcher bauartbedingt ein gewisses Haltemoment aufweist. Durch Wahl einer entsprechenden Getriebeeinheit 109, insbesondere der Übersetzung der Getriebeeinheit 109, kann dadurch ein Haltemoment des Stellantriebs 104 erzielt werden, das ausreichend ist, um die Ventileinheiten in allen Stellungen leistungslos, insbesondere stromlos, zu halten.

Ferner kann auch eine Getriebeeinheit gewählt werden, welches selbsthemmend ist. Dadurch kann ebenfalls die Stellung der Ventileinheiten 88, 98 nicht durch die Federkraft des Federelements 96 oder Druckkräfte, die auf die Ventilkörper 90, 100 wirken, geändert werden.

Die Kraft, die der Stellantrieb 104 ausüben kann, ist größer als die von dem Federelement 96 ausgeübte Schließkraft zuzüglich einer durch Druckunterschiede zwischen dem dritten Kanal 68 und dem ersten Kanal 64 oder dem zweiten Kanal 66 verursachten Druckkräfte.

Ferner weist der Stellantrieb 104 Zentrierelemente 112 auf, welche die Steuerstange 106 und damit auch den ersten Ventilkörper 90 und den zweiten Ventilkörper 100 zentrieren, so dass eine genaue Positionierung der Ventilkörper 90, 100 auf den jeweiligen Ventilsitzen 92, 102 gegeben ist.

Die Zentrierelemente 112 können beispielsweise durch Federlaschen gebildet sein. Insbesondere sind diese Federlaschen an den Mitnehmerelementen 110, 111 angeordnet.

Die beiden Ventileinheiten 88 und 98 weisen jeweils eine Ventilöffnungskennlinie 114 auf, die einen Durchflussbeiwert 116 der jeweiligen Ventileinheit abhängig von einem Verstellweg 118 definiert. Der Verstellweg 118 entspricht der Auslenkung der jeweiligen Ventilkörper 90, 100 aus dem jeweiligen Ventilsitz 92, 102 heraus. Der Durchflussbeiwert ist gegeben durch folgende Formel:

$$k_v = Q \, (\rho/\Delta p)^{1/2},$$

wobei Q die effektive strömungswirksame Fläche der jeweiligen Ventileinheit ist, ρ die Dichte des Fluids und Δp der an der Ventileinheit anliegende Druckgradient ist. Die effektive strömungswirksame Fläche berücksichtigt dabei sowohl den Strömungsquerschnitt als auch sonstige strömungsbeeinflussende geometrische Eigenschaften.

Vorzugsweise weisen die beiden Ventileinheiten 88, 98 und damit die Ventile 56 eine Ventilöffnungskennlinie 114 auf, welche nicht linear ist. Insbesondere weist die Ventilöffnungskennlinie 114 variierende Steigungen auf.

In Bereichen, in denen die Ventilöffnungskennlinie 114 eine kleine Steigung hat, also flach ist, ändert sich der Durchflussbeiwert 116 nur gering bei Veränderung des Verstellwegs 118, im Vergleich zu Bereichen, in denen die Ventilöffnungskennlinie 114 eine größere Steigung aufweist und damit steiler ist.

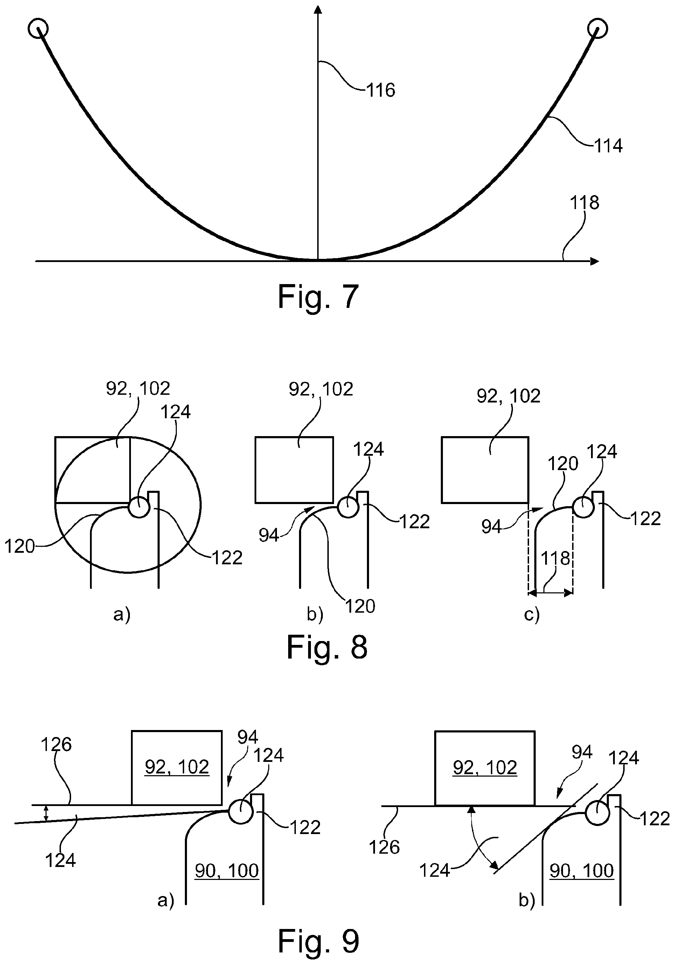

Durch Wahl des Verlaufs der Ventilöffnungskennlinie 114 können somit Bereiche erzielt werden, in welchen der Durchflussbeiwert 116 besonders genau eingestellt werden kann. In Fig. 7 ist beispielsweise eine progressive Ventilöffnungskennlinie 114 dargestellt. Bei kleinen Verstellwegen 118 und damit kleinen Durchflussbeiwerten 116 ist die Ventilöffnungskennlinie 114 flach, so dass über den Verstellweg 118 und damit durch den Stellantrieb 104 der Durchflussbeiwert 116 des Ventils sehr genau eingestellt werden kann. Dies ist insbesondere vorteilhaft bei den Temperaturwechselphasen, in denen die Strömungsgeschwindigkeit des jeweiligen Wärmeträgers gering sein soll und möglichst präzise eingestellt werden können soll. Im Bereich von hohen Durchflussbeiwerten 116 ist die Ventilöffnungskennlinie 114 steiler. Dadurch kann zwar der Durchflussbeiwert 116 nicht mehr so genau eingestellt werden, dafür reduziert sich der benötigte Verstellweg 118, um das Ventil 56 bzw. die jeweilige Ventileinheit 88, 98 vollständig zu öffnen.

Die Form, insbesondere der Verlauf der Ventilöffnungskennlinie 114, ist gegeben durch die Geometrie der Ventilkörper und der Ventilsitze. Insbesondere ist der Verlauf oder die Form einer Ventilfläche 120 der Ventilkörper 90, 100 relevant für den Verlauf der Ventilöffnungskennlinie 114. Die Ventilkörper 90, 100 weisen jeweils einen Kranz 122 auf, mit welchem die Ventilkörper 90, 100 an den jeweiligen Ventilsitzen 92, 102 anliegen und damit die Öffnung abdichten. Eventuell kann eine Dichtung 124 vorgesehen sein, um die Abdichtwirkung zu verbessern.

Von dem Kranz 122 ausgehend erstreckt sich die Ventilfläche 120 axial in Schließrichtung der jeweiligen Ventileinheit und radial nach innen. Insbesondere kann die Ventilfläche 120 konvex ausgebildet sein. Die Ventilfläche 120 ragt in den Ventilsitz 92, 102 in der jeweiligen Ventileinheit, wenn der jeweilige Ventilkörper 90, 100 in dem Ventilsitz liegt. Wird der Ventilkörper 90, 100 teilweise aus dem Ventilsitz 92, 102 gehoben, bildet sich der Ringspalt 94. Die Breite des Ringspaltes ist durch den Abstand der Ventilfläche 120 zu dem jeweiligen Ventilsitz 92, 102 gegeben, insbesondere durch den radialen Abstand.

Dadurch, dass sich die Ventilfläche 120 sowohl in axialer Richtung als auch in radialer Richtung nach innen erstreckt, verbreitert sich der Ringspalt mit zunehmendem Verstellweg 118 der jeweiligen Ventilkörper 90, 100 aus dem Ventilsitz 92, 102. Die Neigung der Ventilfläche 120, also ein Winkel 127 zu einer Ventilachse 126, welche im Wesentlichen einer Achse der Steuerstange 106 entspricht und auch die Richtung des Verstellwegs 118 der beiden Ventilkörper 90, 100 bestimmt, bestimmt die Steigung der Ventilöffnungskennlinie 114. Ist der Winkel 127 der Ventilfläche 120 zur Ventilachse 126 groß, ist die Steigung der Ventilöffnungskennlinie 114 groß. Die Steigung der Kennlinie entspricht dabei in etwa dem Tangens des Winkels 127 der Ventilfläche 120 zu der Ventilachse 126. Ist nun die Ventilfläche 120 gewölbt, beispielsweise konvex, weist die Ventilfläche 120 einen in axialer Richtung variierenden Winkel 127 zu der Ventilachse 126 auf. Dadurch variiert auch die Steigung der Ventilöffnungskennlinie 114 abhängig vom Verstellweg 118. Folglich kann durch Anpassung der Ventilfläche 120 die Ventilöffnungskennlinie 114 eingestellt werden.

Insbesondere weist die Ventilfläche 120 in der Nähe des Kranzes 122 einen geringen Winkel 127 zu der Ventilachse 126 auf. Dieser Bereich ist für die Ventilöffnungskennlinie 114 relevant, bei kleinen Verstellwegen 118 des jeweiligen Ventilkörpers 90, 100 aus dem jeweiligen Ventilsitz 92, 102. In Bereichen, die einen größeren Abstand zu dem Kranz 122 aufweisen, weist die Ventilfläche 120 einen größeren Winkel 127 zu der Ventilachse 126 auf, so dass bei größeren Verstellwegen 118 die Steigung der Ventilöffnungskennlinie 114 größer wird.

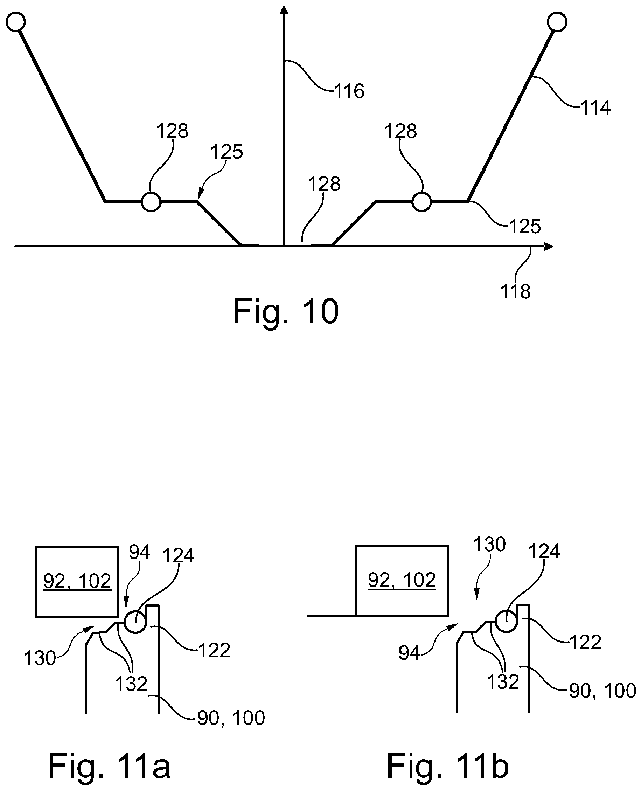

Bei einer anderen Variante der Ventile 56, wie sie beispielsweise in den Fig. 10, 11a und 11b dargestellt sind, weist die Ventilöffnungskennlinie 114 Stufen 125 auf, insbesondere ein Plateaubereich 128. Dies kann beispielsweise sinnvoll sein, wenn ein vorher bekannter definierter Durchflussbeiwert 116 zuverlässig eingestellt werden soll. Durch das Plateau 128 ergibt sich ein breiter Bereich für den Verstellweg 118, in dem der gewünschte Durchflussbeiwert 116 des Ventils 56 erzielt wird. Erzielt werden kann dies, dadurch, dass die Ventilkörper 90, 100 eine Ventilfläche 120 mit Stufen 130 aufweisen. Insbesondere weisen die Ventilflächen 120 einen Bereich 132 auf, in welchen der Winkel 127 zu der Ventilachse 126 sehr klein, insbesondere 0° ist. Alternativ kann auch vorgesehen sein einen Negativen Winkel 127 einzustellen, um ein möglichst flaches Plateau 128 zu erzielen.

Im Übrigen stimmt diese Variante mit der vorher beschriebenen Variante überein.

## Patentansprüche

1. Ventil (56) für eine Adsorptionswärmepumpe (10), mit

   - einem ersten Kanal (64), einem zweiten Kanal (66), einem dritten Kanal (68),
   - einer ersten Ventileinheit (88), die den ersten Kanal (64) öffnet und verschließt und einen ersten Ventilkörper (90) und einen ersten Ventilsitz (92) umfasst,
   - einer zweiten Ventileinheit (98), die den zweiten Kanal (66) öffnet und verschließt und einen zweiten Ventilkörper (100) und einen zweiten Ventilsitz (102) umfasst,
   - einem Federelement (96), das vorgespannt zwischen dem ersten Ventilkörper (90) und dem zweiten Ventilkörper (100) angeordnet ist und den ersten Ventilkörper (90) mit einer Schließkraft in Richtung des ersten Ventilsitzes (92) und den zweiten Ventilkörper (100) mit einer Schließkraft in Richtung des zweiten Ventilsitzes (102) beaufschlagt,
   - mit einem Stellantrieb (104), der eine Steuerstange (106) aufweist, welche den ersten Ventilkörper (90) und den zweiten Ventilkörper (100) durchgreift,
   - mit einem ersten Mitnehmerelement (110) und einem zweiten Mitnehmerelement (111), die jeweils an der Steuerstange (106) gehalten sind und derart angeordnet sind, dass die beiden Ventilköper (90, 100) und das Federelement (96) zwischen den beiden Mitnehmerelementen (110, 111) angeordnet sind,
   - wobei das Ventil (56) eine Schließstellung (70) aufweist, in der die erste Ventileinheit (88) und die zweite Ventileinheit (98) geschlossen sind,
   - wobei das Ventil (56) eine erste Offenstellung (72) aufweist, in der die erste Ventileinheit (88) vollständig geöffnet ist,
   - wobei das Ventil (56) eine zweiten Offenstellung (74) aufweist, in der die zweite Ventileinheit (98) vollständig geöffnet ist, und
   - wobei das Ventil (56) mindestens eine Zwischenstellung (75) aufweist, in der eine der beiden Ventileinheiten (88, 98) teilweise geöffnet ist,

   **dadurch gekennzeichnet,**

   - **dass** das Ventil (56) derart ausgebildet ist, dass der Stellantrieb (104) das Ventil (56) in der Schließstellung (70), in den Offenstellungen (72, 74) und in der mindestens einen Zwischenstellung (75) leistungslos halten kann
   - **dass** der Stellantrieb (104) einen Schrittmotor (107) und eine Getriebeeinheit (109) aufweist, wobei der Schrittmotor (107) und die Getriebeeinheit (109) derart ausgelegt sind, dass ein stromloses Haltemoment ausreicht, um das Ventil (56) in den Stellungen (70, 72, 74, 75) zu halten,
   - **dass** eine Ventilöffnungskennlinie (114) der Ventileinheiten (88, 98), welche einen Durchflussbeiwert (116) abhängig von einem Verstellweg (118) beschreibt, nicht linear ist, und
   - **dass** die Ventilöffnungskennlinie (114) mindestens einen abgeflachten Bereich aufweist.

2. Ventil nach Anspruch 1,
   **dadurch gekennzeichnet,**
   **dass** der Stellantrieb (104) einen Schrittmotor-Linearantrieb umfasst.

3. Ventil nach Anspruch 1 oder 2,
   **dadurch gekennzeichnet,**
   **dass** der Stellantrieb (104) Zentrierelemente (112) aufweist, mit welchen die Steuerstange (106) und vorzugsweise die Ventilkörper (90, 100) zentriert sind.

4. Ventil nach Anspruch 3,
   **dadurch gekennzeichnet,**
   **dass** die Zentrierelemente (112) durch Federlaschen an den Mitnehmerelementen (110, 111) gebildet sind.

5. Ventil nach einem der Ansprüche 1 bis4,
   **dadurch gekennzeichnet,**
   **dass** die Ventilöffnungskennlinie (114) eine über den Verstellweg (118) variierende Steigung aufweist.

6. Ventil nach einem der Ansprüche 1 bis 5,
   **dadurch gekennzeichnet,**
   **dass** die Steigung der Ventilöffnungskennlinie (114) mit steigendem Verstellweg (118) ebenfalls ansteigt.

7. Ventil nach einem der Ansprüche 1 bis 6,
   **dadurch gekennzeichnet,**
   **dass** zumindest einer der Ventilkörper (90, 100) eine Ventilfläche (120) aufweist, die derart verläuft, dass ein Winkel (127) der Ventilfläche (12) zu einer Ventilachse (126) der jeweiligen Ventileinheit (90, 100) in axialer Richtung variiert.

8. Ventil nach einem der Ansprüche 1 bis 7,
   **dadurch gekennzeichnet, dass** der erste Kanal (64), der zweite Kanal (66) und der dritte Kanal (68) jeweils in einer zentralen Kammer (69) münden.

9. Verwendung eines Ventils nach einem der Ansprüche 1 bis 8, in einer Adsorptionswärmepumpe (10), um zwischen einem Hochtemperaturwärmeträger (28) und einem Mitteltemperaturwärmeträger (36) umzuschalten.

## Claims

1. Valve (56) for an adsorption heat pump (10), having

   - a first channel (64), a second channel (66), a third channel (68),
   - a first valve unit (88), which opens and closes the first channel (64) and comprises a first valve body (90) and a first valve seat (92),
   - a second valve unit (98), which opens and closes the second channel (66) and comprises a second valve body (100) and a second valve seat (102),
   - a spring element (96), which is arranged pretensioned between the first valve body (90) and the second valve body (100) and subjects the first valve body (90) to a closing force in the direction of the first valve seat (92) and the second valve body (100) to a closing force in the direction of the second valve seat (102),
   - having an actuating drive (104), which has a control rod (106), which engages through the first valve body (90) and the second valve body (100),
   - having a first driver element (110) and a second driver element (111), which in each case are held on the control rod (106) and are arranged in such a manner that the two valve bodies (90, 100) and the spring element (96) are arranged between the two driver elements (110, 111),
   - wherein the valve (56) has a closed position (70), in which the first valve unit (88) and the second valve unit (98) are closed,
   - wherein the valve (56) has a first open position (72), in which the first valve unit (88) is completely open,
   - wherein the valve (56) has a second open position (74), in which the second valve unit (98) is completely open, and
   - wherein the valve (56) has at least one intermediate position (75), in which one of the two valve units (88, 98) is partially open,

   **characterised in that**

   - the valve (56) is designed in such a manner that the actuating drive (104) can hold the valve (56) in the closed position (70), in the open positions (72, 74) and in the at least one intermediate position (75) without power
   - that the actuating drive (104) has a stepping motor (107) and a gear unit (109), wherein the stepping motor (107) and the gear unit (109) are designed in such a manner that an electroless holding torque is sufficient in order to hold the valve (56) in the positions (70, 72, 74, 75),
   - that a valve opening characteristic curve (114) of the valve units (88, 98), which describes a flow coefficient (116) dependent on an adjustment path (118), is not linear, and
   - that the valve opening characteristic curve (114) has at least one flattened region.

2. Valve according to claim 1,
   **characterised in that**
   the actuating drive (104) comprises a stepping motor-linear drive.

3. Valve according to claim 1 or 2,
   **characterised in that**
   the actuating drive (104) has centring elements (112), with which the control rod (106) and preferably the valve bodies (90, 100) are centred.

4. Valve according to claim 3,
   **characterised in that**
   the centring elements (112) are formed by spring tabs on the driver elements (110, 111).

5. Valve according to any one of claims 1 to 4,
   **characterised in that**
   the valve opening characteristic curve (114) has a slope varying over the adjustment path (118).

6. Valve according to any one of claims 1 to 5,
   **characterised in that**
   the slope of the valve opening characteristic curve (114) also rises with rising adjustment path (118).

7. Valve according to any one of claims 1 to 6,
   **characterised in that**
   at least one of the valve bodies (90, 100) has a valve surface (120), which extends in such a manner that an angle (127) of the valve surface (12) varies relative to a valve axis (126) of the respective valve unit (90, 100) in the axial direction.

8. Valve according to any one of claims 1 to 7,
   **characterised in that** the first channel (64), the second channel (66) and the third channel (68) in each case open in a central chamber (69).

9. Use of a valve according to any one of claims 1 to 8, in an adsorption heat pump (10), in order to switch between a high temperature heat carrier (28) and a medium temperature heat carrier (36).

## Revendications

1.  Vanne (56) pour une pompe à chaleur à adsorption (10), avec

    - un premier canal (64), un deuxième canal (66), un troisième canal (68),
    - une première unité de vanne (88), qui ouvre et ferme le premier canal (64) et comprend un premier corps de vanne (90) et un premier siège de vanne (92),
    - une deuxième unité de vanne (98), qui ouvre et ferme le deuxième canal (66) et comprend un deuxième corps de vanne (100) et un deuxième siège de vanne (102),
    - un élément formant ressort (96), qui est agencé précontraint entre le premier corps de vanne (90) et le deuxième corps de vanne (100) et sollicite le premier corps de vanne (90) avec une force de fermeture en direction du premier siège de vanne (92) et le deuxième corps de vanne (100) avec une force de fermeture en direction du deuxième siège de vanne (102),
    - avec un entraînement de réglage (104), qui présente une tige de commande (106), laquelle traverse le premier corps de vanne (90) et le deuxième corps de vanne (100),
    - avec un premier élément d'entraînement (110) et un deuxième élément d'entraînement (111), qui sont retenus respectivement au niveau de la tige de commande (106) et sont agencés de sorte que les deux corps de vanne (90, 100) et l'élément formant ressort (96) sont agencés entre les deux éléments d'entraînement (110, 111),
    - dans laquelle la vanne (56) présente une position de fermeture (70), dans laquelle la première unité de vanne (88) et la deuxième unité de vanne (98) sont fermées,
    - dans laquelle la vanne (56) présente une première position d'ouverture (72), dans laquelle la première unité de vanne (88) est entièrement ouverte,
    - dans laquelle la vanne (56) présente une deuxième position d'ouverture (74), dans laquelle la deuxième unité de vanne (98) est entièrement ouverte, et
    - dans laquelle la vanne (56) présente au moins une position intermédiaire (75), dans laquelle une des deux unités de vanne (88, 98) est partiellement ouverte,

    **caractérisée en ce**

    - **que** la vanne (56) est réalisée de sorte que l'entraînement de réglage (104) peut retenir sans puissance la vanne (56) dans la position de fermeture (70), dans les positions d'ouverture (72, 74) et dans l'au moins une position intermédiaire (75)
    - **que** l'entraînement de réglage (104) présente un moteur pas à pas (107) et une unité de transmission (109), dans laquelle le moteur pas à pas (107) et l'unité de transmission (109) sont conçus de sorte qu'un couple de retenue sans courant suffit pour retenir la vanne (56) dans les positions (70, 72, 74, 75),
    - **qu'**une courbe caractéristique d'ouverture de vanne (114) des unités de vanne (88, 98), laquelle décrit un coefficient de débit (116) en fonction d'une course de réglage (118), n'est pas linéaire, et
    - **que** la courbe caractéristique d'ouverture de vanne (114) présente au moins une zone aplatie.

2.  Vanne selon la revendication 1,
    **caractérisée en ce**
    **que** l'entraînement de réglage (104) comprend un entraînement linéaire de moteur pas à pas.

3.  Vanne selon la revendication 1 ou 2,
    **caractérisée en ce**
    **que** l'entraînement de réglage (104) présente des éléments de centrage (112), avec lesquels la tige de commande (106) et de préférence les corps de vanne (90, 100) sont centrés.

4.  Vanne selon la revendication 3,
    **caractérisée en ce**
    **que** les éléments de centrage (112) sont formés par des pattes de ressort au niveau des éléments d'entraînement (110, 111).

5.  Vanne selon l'une quelconque des revendications 1 à 4,
    **caractérisée en ce**
    **que** la courbe caractéristique d'ouverture de vanne (114) présente un pas variant sur la course de réglage (118).

6.  Vanne selon l'une quelconque des revendications 1 à 5,
    **caractérisée en ce**
    **que** le pas de la courbe caractéristique d'ouverture de vanne (114) avec course de réglage croissante (118) augmente également.

7.  Vanne selon l'une quelconque des revendications 1 à 6,
    **caractérisée en ce**
    **qu'**au moins un des corps de vanne (90, 100) présente une surface de vanne (120), qui s'étend de sorte qu'un angle (127) de la surface de vanne (12) varie par rapport à un axe de vanne (126) de l'unité de vanne (90, 100) respective dans la direction axiale.

**8.** Vanne selon l'une quelconque des revendications 1 à 7, **caractérisée en ce que** le premier canal (64), le deuxième canal (66) et le troisième canal (68) débouchent respectivement dans une chambre centrale (69).

**9.** Utilisation d'une vanne selon l'une quelconque des revendications 1 à 8, dans une pompe à chaleur à adsorption (10) pour commuter entre un caloporteur de haute température (28) et un caloporteur de température moyenne (36).

Fig. 1

Fig. 2

Fig. 3

Fig. 4

Fig. 5

Fig. 6

Fig. 7

Fig. 8

Fig. 9

Fig. 10

Fig. 11a  Fig. 11b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009036545 A1
- DE 102014211703 A1
- DE 102011003664 A1
- JP 2005003190 A
- JP 2010038336 A
- WO 2006092401 A1
- WO 2012108140 A1